# EUROPÄISCHE PATENTSCHRIFT

(11) **EP 0 513 438 B1**
(45) Veröffentlichungstag und Bekanntmachung des Hinweises auf die Patenterteilung: **01.09.1993**
(21) Anmeldenummer: 91119319.1
(22) Anmeldetag: 13.11.1991
(51) Int. Cl.: F02F 11/00, F16J 15/32

(54) **Kurbelwellendichtung für eine Verbrennungskraftmaschine**
Crankshaft seal for an internal combustion engine
Dispositif d'étanchéité de vilebrequin pour un moteur à combustion interne

(30) Priorität: 16.05.1991 DE 4115922
(43) Veröffentlichungstag der Anmeldung: 19.11.1992
(73) Patentinhaber: Firma Carl Freudenberg, 69469 Weinheim (DE)
(72) Erfinder: Schmitt, Wolfgang, W-6806 Viernheim (DE)

(56) Entgegenhaltungen:
- DE-C- 1 087 856
- DE-C- 3 305 765
- US-A- 3 801 111
- US-A- 4 114 898

## Beschreibung

Die Erfindung betrifft eine Kurbelwellendichtung für eine Verbrennungskraftmaschine, umfassend ein Spritzgußteil mit einem Lippenring aus polymerem Werkstoff, der mittels eines Tragteils aus Blech an dem Spritzgußteil befestigt ist.

Eine Kurbelwellendichtung für eine Verbrennungskraftmaschine ist aus der DE-PS 33 05 765 bekannt. Ein Verschlußdeckel, der bevorzugt im Spritzgußverfahren hergestellt wird, weist einen dynamischen Dichtbereich und zwei statische Dichtbereiche auf, die alle drei in unterschiedlichen Ebenen angeordnet sind. Alle drei in unterschiedlichen Ebenen liegenden Dichtbereiche weisen profilierte Gummidichtelemente auf, wobei das Dichtelement zur Abdichtung der Kurbelwelle an einen Radialansatz des Deckelgrundkörpers anvulkanisiert ist, während die anderen Dichtelemente, die durch Gummirechteckprofile gebildet sind, in gefrästen Nuten festgelegt sind. Diese Anordnung gewährleistet eine exakte und mit gleichmäßigem Anpressdruck versehene Festlegung an dem abzudichtenden, benachbarten Teil, wobei allerdings zu beachten ist, daß sich aufgrund der direkten Anordnung der Dichtelemente im Spritzgußteil ein erhöhter Herstellungsaufwand ergibt, wodurch der Verschlußdeckel in wirtschaftlicher Hinsicht wenig befriedigend ist. Außerdem ist das Spritzgußteil bei dieser Anordnung vergleichsweise schwer gestaltet.

Aus der US-A-3801 111 ist eine Dichtung an einer Welle bekannt. Hier wird gezeigt, daß zwei Dichtungselemente (einer davon ein Lippenving) über ein Blech miteinander verbunden sind. Das Blech weist einen Flanschbereich auf, der in einer Gehäuseausnehmung gehalten ist.

Eine ähnliche Kurbelwellendichtung ist aus der DE-PS 36 34 735 bekannt. Danach weist ein Verschlußdeckel für ein Gehäuse eine dynamisch wirkende Dichtung zur Abdichtung einer Welle und eine statisch wirkende Dichtung für eine Deckelflanschfläche auf, wobei der Verschlußdeckel aus einem profilgezogenen Blechkörper mit mehreren Radialflächen besteht, an die die Dichtungen anvulkanisiert sind. Dabei ist allerdings zu beachten, daß mehrere in engem Abstand benachbarte Befestigungsbohrungen vorzusehen sind, um eine ausreichend große Anpressung des Verschlußdeckels, beispielsweise an einen Motorblock, zu bewirken. Des weiteren ist die Materialstärke des Blechkörpers vergleichsweise dick und weist zur Festlegung der Dichtungen zahlreiche Richtungsänderungen auf, wodurch die Herstellbarkeit erschwert wird.

Der Erfindung liegt die Aufgabe zugrunde, eine Kurbelwellendichtung der eingangs genannten Art derart weiterzuentwickeln, daß die Wellendichtung unabhängig von der statischen Dichtung erzeugt sein kann. Dadurch können beide Dichtungen vorteilhafterweise aus unterschiedlichen Materialien bestehen. Außerdem sollen die Herstellbarkeit und die Montage der Kurbelwellendichtung deutlich vereinfacht werden, bei deutlich geringerem Gewicht und Materialaufwand, wodurch die Kurbelwellendichtung in wirtschaftlicher Hinsicht kostengünstig herstellbar ist.

Diese Aufgabe wird bei der erfindungsgemäßen Kurbelwellendichtung mit den kennzeichnenden Merkmalen von Patentanspruch 1 gelöst. Auf vorteilhafte Ausgestaltungen nehmen die Unteransprüche Bezug.

Bei der Kurbelwellendichtung ist es vorgesehen, daß das Tragteil durch einen radial nach außen vorstehenden Flanschabschnitt begrenzt ist und daß der Flanschabschnitt in einer axial geöffneten Ausnehmung des Spritzgußteils aufgenommen und auf der in axialer Richtung von dem Spritzgußteil abgewandten Seite mit zumindest einer vorstehenden Dichtlippe versehen ist. Hierbei ist von Vorteil, daß das Spritzgußteil nicht direkt mit den Dichtungen in Berührung kommt. Es bedarf nicht mehr, wie bei den bisher bekannten Ausführungen, einer Feinbearbeitung der Berührungsflächen. Außerdem kann die Ölwannendichtung separat ausgetauscht werden und die dynamisch beanspruchte Wellendichtung kann unabhängig von der statischen Dichtung erzeugt sein. Die verwendeten Materialien können dadurch, je nach Aufgaben und Belastung den jeweiligen Gegebenheiten des Anwendungsfalles besser angepaßt werden. Die Wellendichtung kann beispielsweise aus PTFE oder FKM bestehen, während die statische Abdichtung bevorzugt aus ACM oder Silikon besteht. Das die Dichtlippen aufweisende Tragteil ist sehr leichtgewichtig und dadurch einfach zu handhaben. Es kann beispielsweise einen Z-ähnlichen Querschnitt aufweisen, an dessen Vorsprüngen die Dichtungen anvulkanisiert sind. Das Tragteil wird unabhängig von dem Spritzgußteil erzeugt und nachträglich mit diesen vereint.

Das Spritzgußteil kann in einer sich parallel zu der Kurbelwelle erstreckenden, ebenen Querfläche enden und die Dicht-Lippe in einer einstückig angeformten Querlippe, die die Querfläche und die Dichtlippe auf der von dem Spritzgußteil in axialer Richtung abgewandten Seite im herstellungsbedingten Zustand keilförmig überragt. Diese Ausgestaltung begünstigt eine einfache Montage der Kurbelwellendichtung. Eine Beschädigung der Querlippe, die die Querfläche und die Dichtlippe in axialer Richtung keilförmig überragt, ist nahezu ausgeschlossen. Nur bei montierter, betriebsbereiter Kurbelwellendichtung liegt die keilförmige Querlippe dichtend an der beispielsweise angrenzenden Ölwanne an. Im herstellungsbedingten Zustand ist die Querlippe durch die Querfläche des Spritzgußteiles geschützt. Während der Befestigung der Kurbelwellendichtung beispielsweise mittels Befestigungsschrauben, wird die Querlippe elastisch verformt und legt sich einerseits am axial angrenzenden Motor und andererseits an der in radialer Richtung angrenzenden Ölwanne dichtend an. Eine zuverlässige Abdichtung und sehr gute Gebrauchseigenschaften während einer langen Gebrauchsdauer sind dadurch gewährleistet.

Gemäß einer vorteilhaften Ausgestaltung ist vorgesehen, daß mehrere axial vorstehende Dichtlippen von der Querlippe gemeinsam begrenzt werden. Dadurch wird eine verbesserte Abdichtung in axialer Richtung, beispielsweise gegen eine Verbrennungskraftmaschine gewährleistet.

Das Spritzgußteil und das Tragteil können durch eine Verklebung miteinander verbunden sein. Durch die zweiteilige Ausgestaltung von Spritzgußteil und Tragteil kann das die Dichtlippen aufweisende Tragteil sehr leichtgewichtig gestaltet sein und ist dadurch leicht zu handhaben. Auch das Spritzgußteil, das eine Gummidichtung nicht direkt berührt, kann bedeutend leichter gestaltet werden. Dies ist durch den geringeren Steifigkeitsbedarf der Gummidichtungen möglich. Die Verbindung der beiden Teile kann beispielsweise durch eine Verklebung erfolgen. Hierbei ist von Vorteil, daß das Spritzgußteil und das Trägerteil zuverlässig und dauerhaft miteinander verbunden sind, ohne daß die gesamte Kurbelwellendichtung vergrößerte Abmessungen in axialer Richtung aufweist.

Das Tragteil kann aus einem tiefgezogenen Blech bestehen. Aufgrund der einfachen Form, und dadurch, daß der überwiegende Teil der Kräfte von dem Spritzgußteil aufgenommen wird, kann das Tragteil aus vergleichsweise dünnwandigem Blech in wirtschaftlicher Hinsicht kostengünstig hergestellt werden.

Im Hinblick auf ein geringes Gewicht der Kurbelwellendichtung kann das Spritzgußteil aus einem Leichtmetall-Druckgußteil bestehen.

Der Gegenstand der vorliegenden Erfindung wird nachfolgend anhand der Zeichnungen weiter verdeutlicht. Diese zeigen ein Ausgestaltungsbeispiel, teilsweise in schematischer Darstellung. In
Figur 1 die erfindungsgemäße Kurbelwellendichtung in einer Ansicht von der Motorseite,
Figur 2 einen Schnitt A-A gemäß Figur 1,
Figur 3 einen Schnitt B-B gemäß Figur 1.

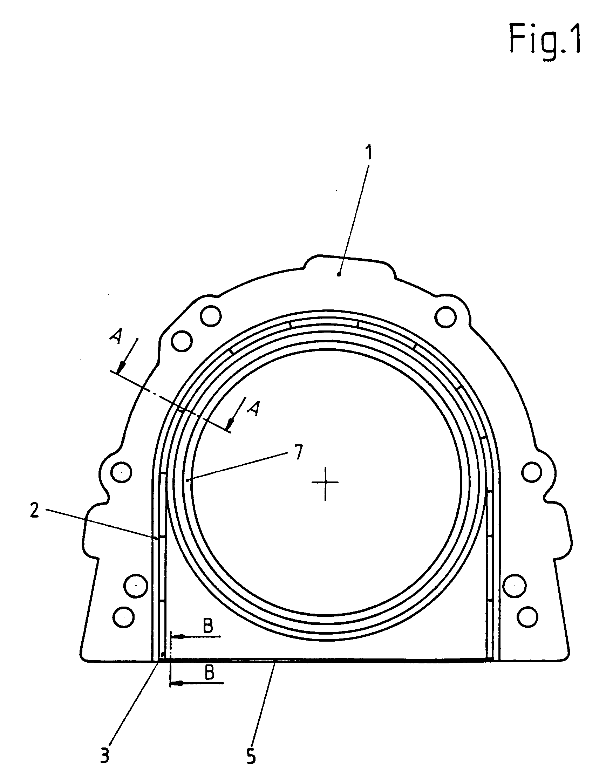

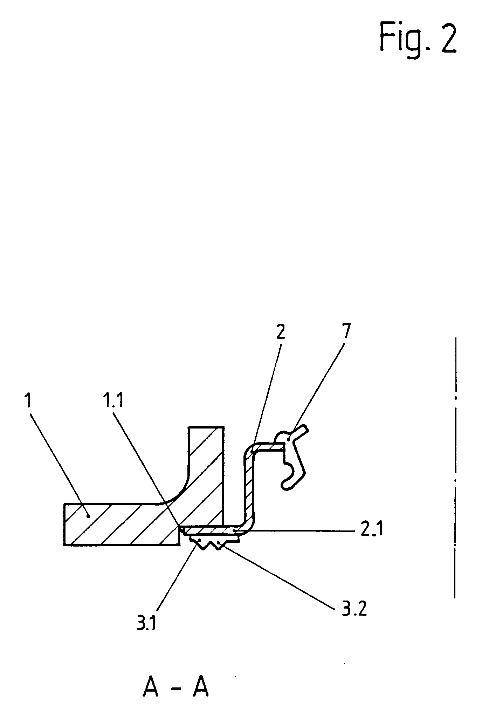

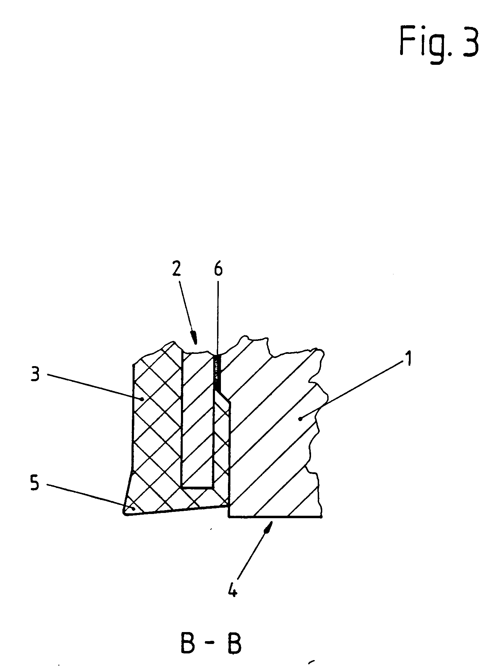

In den Figuren 1, 2 und 3 ist eine Kurbelwellendichtung für eine Verbrennungskraftmaschine gezeigt, die ein Spritzgußteil 1, ein Tragteil 2 und eine Dichtlippe 3 umfaßt. Das Tragteil 2 ist durch einen radial nach außen stehenden Flanschabschnitt 2.1 begrenzt, der in einer axial geöffneten Ausnehmung 1.1 des Spritzgußteils 1 aufgenommen ist. Auf der in axialer Richtung von dem Spritzgußteil 1 abgewandten Seite ist der Flanschabschnitt 2.1 mit zwei axial vorstehenden Dichtlippen 3.1, 3.2 versehen. In den Figuren 1 und 2 ist die dynamisch beanspruchte Wellendichtung 7 gezeigt, die während der bestimmungsgemäßen Verwendung die hier nicht dargestellte Kurbelwelle dichtend berührt. Zur sicheren Abdichtung und einfachen Montage ist vorgesehen, daß die Dichtlippe 3 einstückig an eine Querlippe 5 angeformt ist, wie in den Figuren 1 und 3 zu erkennen. Die Querlippe 5 überragt die Querfläche 4 des Spritzgußteiles 1 und die Dichtlippe 3 im herstellungsbedingten Zustand keilförmig. In Figur 3 ist die Verklebung 6 dargestellt, die das Spritzgußteil 1 und das Tragteil 2 miteinander verbindet. Das Tragteil 2 besteht bevorzugt aus tiefgezogenem Blech, während das Spritzgußteil 1 aus einem Leichtmetall-Druckguß besteht. Die Querlippe 5 ist im unbelasteten Zustand dargestellt. Sie legt sich im eingebauten, betriebsbereiten Zustand der Kurbelwellendichtung gleichzeitig dichtend an einen beispielsweise von links angrenzenden Motorblock und eine von unten angrenzende Ölwanne an. Im hier dargestellten, herstellungsbedingten Zustand überragt die Querfläche 4 die Querlippe 5, wodurch einer Beschädigung der Querlippe 5 bei der Montage der Kurbelwellendichtung wirksam vorgebeugt wird.

## Patentansprüche

1. Kurbelwellendichtung für eine Verbrennungskraftmaschine, umfassend ein Spritzgußteil mit einem Lippenring (7) aus polymerem Werkstoff, der mittels eines Tragteils (2) aus Blech an dem Spritzgußteil (1) befestigt ist, dadurch gekennzeichnet, daß das Tragteil (2) durch einen radial nach außen vorstehenden Flanschabschnitt (2.1) begrenzt ist und daß der Flanschabschnitt (2.1) in einer axial geöffneten Ausnehmung (1.1) des Spritzgußteils (1) aufgenommen und auf der in axialer Richtung von dem Spritzgußteil (1) abgewandten Seite mit zumindest einer axial vorstehenden Dichtlippe (3) versehen ist.

2. Kurbelwellendichtung nach Anspruch 1, dadurch gekennzeichnet, daß das Spritzgußteil (1) in einer sich parallel zu der Kurbelwelle erstreckenden, ebenen Querfläche (4) endet und die Dichtlippe (3) in einer einstückig angeformten Querlippe (5), die die Querfläche (4) und die Dichtlippe (3) auf der von dem Spritzgußteil (1) in axialer Richtung abgewandten Seite im herstellungsbedingten Zustand keilförmig überragt.

3. Kurbelwellendichtung nach Ansprüchen 1 bis 2, dadurch gekennzeichnet, daß mehrere axial vorstehende Dichtlippen (3.1, 3.2, ...) vorgesehen sind und daß die Querlippe (5) alle Dichtlippen (3.1, 3.2, ...) gemeinsam begrenzt.

4. Kurbelwellendichtung nach Ansprüchen 1 bis 3, dadurch gekennzeichnet, daß das Spritzgußteil (1) und das Tragteil (2) durch eine Verklebung (6) verbunden sind.

5. Kurbelwellendichtung nach Ansprüchen 1 bis 4, dadurch gekennzeichnet, daß das Tragteil (2) aus einem tiefgezogenen Blech besteht.

6. Kurbelwellendichtung nach Ansprüchen 1 bis 5, dadurch gekennzeichnet, daß das Spritzgußteil (1) aus einem Leichtmetall-Druckgußteil besteht.

## Claims

1. A crankshaft seal for an internal combustion engine, comprising an injection-moulded part with a lip ring (7) of polymeric material which is secured on the injection-moulded part (1) by means of a carrier part (2) of sheet metal, characterised in that the carrier part (2) is bounded by a flange portion (2.1) which projects radially outwards and in that the flange portion (2.1) is accommodated in an axially open recess (1.1) of the injection-moulded part (1) and is provided on the side facing away in the axial direction from the injection-moulded part (1) with at least one axially projecting sealing lip (3).

2. A crankshaft seal according to claim 1, characterised in that the injection-moulded part (1) ends in a flat transverse surface extending parallel to the crankshaft and the sealing lip (3) ends in an integrally moulded transverse lip (5) which, in the as-manufactured condition, projects in a wedge shape beyond the transverse surface (4) and the sealing lip (3) on the side facing away in the axial direction from the injection-moulded part (1).

3. A crankshaft seal according to either of claims 1 and 2, characterised in that a plurality of axially projecting sealing lips (3.1, 3.2, ...) are provided and that the transverse lip (5) bounds all the sealing lips (3.1, 3.2, ...) in common.

4. A crankshaft seal according to any of claims 1 to 3, characterised in that the injection-moulded part (1) and the carrier part (2) are connected by an adhesive bond (6).

5. A crankshaft seal according to any of claims 1 to 4, characterised in that the carrier part (2) comprises a deep-drawn metal sheet.

6. A crankshaft seal according to any of claims 1 to 5, characterised in that the injection-moulded part (1) comprises a light-alloy die-casting.

## Revendications

1. Joint d'étanchéité de vilebrequin pour un moteur à combustion interne, comportant une pièce moulée par injection pourvue d'un anneau à lèvres (7) constitué d'un matériau polymère et qui est fixé, au moyen d'une pièce porteuse (2) formée de tôle, sur la pièce moulée par injection, caractérisé en ce que la pièce porteuse (2) est délimitée par une partie en forme de collerette (2.1), faisant saillie radialement vers l'extérieur, et en ce que la partie en forme de collerette (2.1) est reçue dans un évidement (1.1), ouvert axialement, de la pièce moulée par injection (1) et est pourvue, sur le côté opposé dans une direction axiale à la pièce moulée par injection (1), d'au moins une lèvre d'étanchéité (3) faisant saillie axialement.

2. Joint d'étanchéité pour vilebrequin selon la revendication 1, caractérisé en ce que la pièce moulée par injection (1) se termine dans une surface transversale plane (4), s'étendant parallèlement au vilebrequin, et la lèvre d'étanchéité (3) se termine dans une lèvre transversale (5) formée d'une seule pièce et qui fait saillie en forme de coin, dans l'état résultant de la fabrication, de la surface transversale (4) et de la lèvre d'étanchéité (3) sur le côté opposé, dans une direction axiale, à la pièce moulée par injection.

3. Joint d'étanchéité pour vilebrequin selon une des revendications 1 et 2, caractérisé en ce qu'il est prévu plusieurs lèvres d'étanchéité (3.1, 3.2, ...) faisant saillie axialement, et en ce que la lèvre transversale (5) délimite en commun toutes les lèvres d'étanchéité (3,1, 3.2, ...).

4. Joint d'étanchéité pour vilebrequin selon les revendications 1 à 3, caractérisé en ce que la pièce moulée par injection (1) et la pièce porteuse (2) sont reliées par un collage (6).

5. Joint d'étanchéité pour vilebrequin selon les revendications 1 à 4, caractérisé en ce que la pièce porteuse (2) est constituée de tôle emboutie.

6. Joint d'étanchéité pour arbre selon les revendications 1 à 5, caractérisé en ce que la pièce moulée par injection (1) se compose d'une pièce en métal léger moulé sous pression.
